# EUROPEAN PATENT APPLICATION

(11) **EP 4 187 682 A1**
(43) Date of publication of application: **31.05.2023**
(21) Application number: 21210387.3
(22) Date of filing: 25.11.2021
(51) Int. Cl.: H01M 10/625, H01M 50/105, H01M 50/121, H01M 50/129, H01M 50/131, H01M 10/613

(54) **LAMINATED FILM FOR PACKAGING OF POUCH-TYPE BATTERY CELLS, POUCH-TYPE BATTERY CELL AND BATTERY**

(71) Applicant: Lilium eAircraft GmbH, 82234 Wessling (DE)
(72) Inventor: NORTHWOOD, John, 80339 München (DE); FINKELSTEIN, David, 81245 München (DE); FORSTERMANN, Dominic Pascal, 80331 München (DE); PITRE, Ryan, 80687 München (DE); FRITSCH, Gerd, 82234 Wessling (DE); KRAFFT, Roman, 72764 Reutlingen (DE)
(74) Representative: Feller, Frank

(57) **Abstract**

The present invention is directed to a laminated film 10 for packaging of pouch-type battery cells 26, the laminated film 10 comprising a plurality of layers including: a first polymer layer 12, a second polymer layer 16, a metal barrier layer 18 disposed between the first polymer layer 12 and the second polymer layer 16, characterized in that the layers further include a heat spreading layer 20 made of a thermally conductive material, wherein the heat spreading layer 20 is integrated within the laminated film 10 such as to be disposed between the first polymer layer 12 and the second polymer layer 16.

## Description

The present invention generally relates to rechargeable batteries and in particular to batteries comprising one or more pouch-type battery cells. Furthermore, the invention relates to a laminated film for packaging of pouch-type battery cells.

Battery development has been in the focus of research for the last decades and belongs to the major challenges of modern technology. A large number of different battery systems are nowadays known, which are specifically designed for different growing markets such as portable electronic devices, electric vehicles or industrial power storage devices. Depending on the application, different types of batteries have been developed to meet different requirements with regard to energy density, temperature range of operation, weight and size of the battery, lifetime or manufacturing costs.

Pouch-type battery cells are known be characterized by a low weight and high energy density. Usually, lithium-ion type electrode assembly comprising a cathode, an anode and a separator is accommodated within a flexible pouch made from a laminated film. The laminated film of the pouch conventionally includes an aluminum layer sandwiched between two polymer layers. While the polymer layers serve for mechanical stability and electrical insulation, the aluminum layer forms a barrier against permeation of gases and moisture. Such laminated films can be manufactured at low costs and low weight, thus keeping the non-electrochemically active mass of the battery at a minimum and increasing the energy density of the battery.

It is, however, still difficult to develop high-energy batteries based on pouch-type cells for driving electric vehicles or high-energy industrial applications requiring in particular more than 20 kWh of electric energy. To achieve a high-energy output, a plurality of cells need to be stacked and operated in battery packs in a confined space. As a result, a thermal energy (heat) generated during operation or during charging of the cells cannot easily be dissipated and transported outside the battery to a heat sink or to the ambient air. In order to avoid an uncontrolled increase of temperature within a stack of pouch-type battery cells, extensive active or passive cooling needs to be provided for conventional battery cells, which increases size, weight and manufacturing costs of the batteries. For example, conventional battery modules comprising a stack of rectangular pouch-type battery cells use active cooling means for cooling the edges of the cell stack. However, since the in-plane thermal conductivity of the pouch cells, i.e. along the pouch surface, is limited, uniform cooling of the cells is difficult and temperature gradients across the cell areas remain, which reduce performance and lifetime of the battery. Furthermore, thermal management systems for pouch cells that interface with the large surface area of the cells are complex and heavy.

The above-mentioned problems become even more pronounced when pouch-type cell batteries are conceived for the use in electric aircrafts, e.g. for providing energy to electric aircraft engines. In particular, in an aircraft, the requirements for high energy, fast charging and low weight are both particularly high. Furthermore, thermal management is a safety issue as well and therefore becomes even more important in an aircraft battery.

In view of this background, it was an object of the present invention to provide a laminated film for packaging of pouch-type battery cells, a pouch-type battery cell and a battery comprising at least one pouch-type battery cell, such that high battery performance and low battery mass are achieved. Furthermore, in embodiments of the invention, an increased battery lifetime, a decrease in charging time and a reduction in complexity, volume and cost of the battery are achieved as well.

In order to attain the above object, according to a first aspect of the present invention, there is provided a laminated film for packaging of pouch-type battery cells, the laminated film comprising a plurality of layers including: a first polymer layer, a second polymer layer, a metal barrier layer disposed between the first polymer layer and the second polymer layer, and a heat spreading layer made of a thermally conductive material, wherein the heat spreading layer is integrated within the laminated film such as to be disposed between the first polymer layer and the second polymer layer.

Therefore, according to an important feature of the present invention, a heat spreading layer made of a thermally conductive material is provided, such as to be integrated within the laminated film, wherein the heat spreading layer is able to facilitate transport of heat over and across the cell and therefore to homogenize the temperature across the cell surface. Accordingly, temperature gradients across the cells are reduced, and the performance of the cells is improved. Furthermore, heat can efficiently be dissipated from the cells through the heat spreading layer, for example towards cooling means or a heat sink, in order to provide for efficient temperature control. As a result, battery performance is improved and/or charging can be accelerated, while overheating can be avoided more reliably.

Furthermore, by integrating the heat spreading layer within the laminated film, additional layers for mechanically stabilizing the heat spreading layer or for covering and protecting the heat spreading layer against ambient air or any chemicals can be omitted, such that mass and volume can be both reduced. Instead, other layers of the laminated film such as the first and/or second polymer layer and/or the metal barrier layer, may fulfil the function of covering and protecting the heat spreading layer. In particular, the first and/or the second polymer layer may fulfil a double function for protecting not only the metal barrier layer but also the heat spreading layer against mechanical or chemical impacts.

As an additional advantage of integrating the heat spreading layer into the laminated film, manufacturing costs of the laminated film as well as manufacturing costs of pouch-type battery cells are kept at a low level, because there is still only one laminated film to be wrapped around the electrode assembly and sealed to manufacture a pouch-type battery cell with the improved thermal characteristics according to the present invention.

In order to ensure an efficient heat transport with a heat spreading layer having a relatively low thickness, in particular a thickness comparable to that of the other layers of the laminated film, it is preferable that the heat spreading layer has a thermal conductivity that is larger than 200 W/(m K), preferably larger than 1000 W/(m K).

The heat spreading layer may be made from a carbon material as carbon materials are known to combine high thermal conductivity with low weight. In particular, a pyrolytic carbon (or pyrolytic graphite), for example thermally annealed pyrolytic graphite (APG or TPG), may be used, which is a material known as such to have low weight but very high in-plane thermal conductivity of about 1700 W/m K at room temperature. Pyrolytic carbon may be produced in a process as conventionally known as such, for example by heating a hydrocarbon gas and growing pyrolytic graphite on a substrate (thermoplastic foil, PET, adhesive tape etc.) using a chemical vapor deposition or impregnation process. The pyrolytic carbon may then be annealed at high temperature. Pyrolytic carbon layers are commercially available as sheet or web material.

Preferably, the heat spreading layer has a thickness between 0.5 µm and 200 µm, preferably between 1 µm and 10 µm, in order to achieve a favorable balance between thermal conductivity and mechanical strength on the one hand and weight and volume on the other hand. By laminating the heat spreading layer on both of its opposite sides to adjacent layers of the plurality of layers of the laminated film, for example by means of a suitable adhesive, sufficient mechanical stability can be achieved even when using a very thin heat spreading layer.

The first polymer layer may be made from a polypropylene (PP), preferably a cast polypropylene (CPP), which is a stiff and chemically stable material, in order to ensure high mechanical and chemical resistance of the laminated film, and serves as thermal sealing agent. Alternatively, a polyethylene (PE) may be used as a material for the first polymer layer. The thickness of the first polymer layer may be between 50 µm and 100 µm, in order to ensure a good balance between mechanical strength and weight. Furthermore, the second polymer layer may be made from a polyethylene terephthalate (PET) for providing both mechanical stability and electrical insulation. Alternatively, a polyethylene naphthalate (PEN) may be used as a material of the second polymer layer. The total thickness of the second polymer layer may be between 5 µm and 25 µm, in order to ensure a good balance between mechanical strength and weight.

The metal barrier layer is preferably made from aluminum. Although other metals such as copper, stainless steel or gold could be considered as suitable barrier materials, aluminum is preferred in view of its low cost and weight.

In a further embodiment of the present invention, the layers of the laminated film may further include a nylon layer, preferably made from oriented nylon (ONY) in order to further improve the tensile strength of the laminated film. The thickness of the nylon layer may for example be between 10 µm and 20 µm.

The layers of the laminated film may be attached or bonded to one another by means of an adhesive such as to form a mechanically robust structure. As the laminated film is configured for packaging pouch-type battery cells, it may have a dedicated inner side facing the inside of the pouch towards the electrode assembly, and an outer side facing the exterior of the pouch, away from the electrode assembly. In particular, the first polymer layer may be adapted to form an inner layer of a pouch of a pouch-type battery cell, and the second polymer layer may be adapted to form an outer layer of a pouch of a pouch-type battery cell. The heat spreading layer may be disposed between the metal barrier layer and the first polymer layer. Therefore, if the first polymer layer is the inner layer of a pouch for a pouch-type battery cell, the heat spreading layer is arranged closer to the electrode assembly than the aluminum layer and is therefore able to effectively receive and dissipate heat generated by the electrode assembly.

According to a second aspect of the present invention, the above object is achieved by a pouch-type battery cell comprising an electrode assembly, wherein the electrode assembly comprises a cathode, an anode and a separator, and wherein the electrode assembly is accommodated within a pouch made from a laminated film as described above according to the first aspect of the present invention. The cathode preferably comprises a current collector and a cathode material attached to the current collector, e.g. deposited onto the current collector. Likewise the anode preferably comprises a current collector and an anode material attached to the current collector, e.g. deposited onto the current collector.

With a pouch-type battery cell according to the second aspect of the invention, the same advantages and effects can be achieved as described above for the laminated film according to the first aspect of the invention. In particular, heat generated by the pouch-type battery cell can effectively and homogeneously be dissipated across the cell area and away from the cell, while weight and volume of the battery cell are kept at a minimum.

According to a third aspect of the present invention, in order to achieve the above object, there is provided a battery comprising at least one pouch-type battery cell according to the second aspect of the present invention, such as to achieve the advantages and effects as described above for the first and second aspects of the present invention. In particular, such batteries can be designed to produce high energy output at relatively low weight, wherein improved heat dissipation and therefore superior thermal management can be achieved.

In particular, in a preferred embodiment of the invention according to the third aspect, the battery may further comprise a thermal management system adapted to control the temperature of the at least one pouch-type battery cell, said thermal management system including active cooling means and/or passive cooling means, wherein said cooling means are preferably provided in direct thermal contact with the head spreading layer of the at least one pouch-type battery cell. Therefore, a high energy light-weight battery can be provided through effective cooling.

In a particular embodiment, the battery can specifically be adapted to drive an electric vehicle, more particularly an engine of an electric aircraft. In an electric aircraft, the requirements with regard to energy output on the one hand and weight/volume on the other hand, are particularly pronounced. At the same time, thermal management is crucial for batteries of electric aircrafts, because overheated batteries during flight will quickly lead to a serious emergency. The present invention now allows the use of pouch-type cell batteries within aircrafts in order to provide highest energy output at low weight as well as utmost safety. On the other hand, pouch-type cell batteries according to the invention may be used in automotive and other industrial applications, especially high power applications, such as automotive traction, or in consumer applications, such as e-bikes, scooters or handheld machines, for example.

In particular, the battery according to the third aspect of the invention may be adapted to drive an engine of an electric vertical takeoff and landing aircraft (eVTOL aircraft), wherein the engine of the eVTOL aircraft is rotatable between a hover position in which a thrust direction of the engine is substantially parallel to the vertical axis of the aircraft, and a cruise position in which a thrust direction of the engine is substantially parallel to the longitudinal axis of the aircraft. In eVTOL aircrafts, the requirements regarding energy output, weight and safety of batteries are even more pronounced, because the electric engines need to have sufficient power to support the weight of the aircraft in hover mode and because aircrafts of this type are frequently to be used in urban areas, which requires a further increased level of safety.

The invention will now be further described on the basis of preferred embodiments with reference to the accompanying drawings, in which:
- Fig. 1: shows a schematic cross-section of a laminated film according to an embodiment of the present invention,
- Fig. 2: shows a schematic cross-section of a pouch-type battery cell according to an embodiment of the present invention
- Fig. 3: shows a battery according to an embodiment of the present invention, having a pouch-type battery cell.

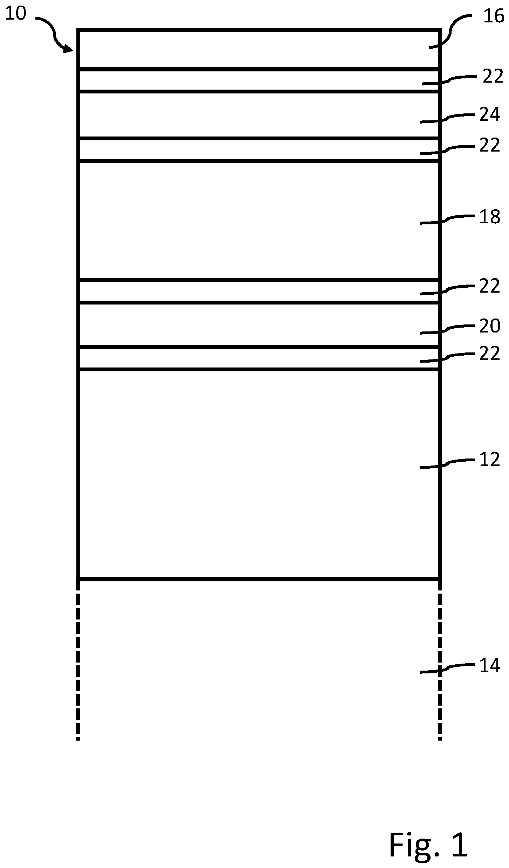

A laminated film according to an embodiment of the present invention is shown in cross-section in Fig. 1 and is generally denoted with reference sign 10. Laminated film 10 comprises a plurality of layers as will be set out in the following. A first polymer layer 12, which is made of polypropylene, in particular a cast polypropylene (CPP), with a thickness of preferably 80 µm, forms an inner layer of the laminated film 10, i.e. a layer facing an electrode assembly 14 of a battery cell, when the laminated film 10 is wrapped around the electrode assembly 14 to form a pouch of a pouch-type battery cell.

Laminated film 10 further comprises a second polymer layer 16, which may be made from a polyethylene terephthalate (PET), for example with a thickness of 12 µm, and which forms an outer layer of laminated film 10 facing towards an exterior side of a pouch-type battery cell when the laminated film 10 is wrapped around electrode assembly 14.

An aluminum layer 18, for example with a thickness of 40 µm, is disposed between the first polymer layer 12 and the second polymer layer 16. Aluminum layer 18 serves as a metal barrier layer to provide a barrier against diffusion of air and chemicals between the electrode assembly 14 and the exterior.

Furthermore, according to a feature of the present invention, a heat spreading layer 20 is disposed between the first polymer layer 12 and the second polymer layer 16, in particular between the first polymer layer 12 and the aluminum layer 18. Heat spreading layer 20 is preferably made from pyrolytic carbon (pyrolytic graphite). In this embodiment, the pyrolytic carbon layer may have a thickness of 5 µm. The heat spreading layer 20 may be attached to its adjacent layers by means of an adhesive 22. In the present embodiment, one side of the heat spreading layer 20 is directly attached via adhesive 22 to the aluminum layer 18, while the opposite side of the heat spreading layer 20 is directly attached via adhesive 22 to the first polymer layer 12. However, in alternative embodiments, one or more additional layers may be disposed between the aluminum layer 18 and the heat spreading layer 20 and/or between the heat spreading layer 20 and the first polymer layer 12.

Furthermore, an additional nylon layer 24, for example made from oriented nylon (ONY), preferably with a thickness of 15 µm, may be provided in the laminated film 10. In the present embodiment, nylon layer 24 is disposed between the aluminum layer 18 and the second polymer layer 16. In particular, one side of the nylon layer 24 may be directly attached to the second polymer layer 12 via adhesive 22, while the opposite side of nylon layer 24 may be directly attached via adhesive 22 to the aluminum layer 18.

As described above, all layers of the laminated film 10 are attached to one another via adhesive 22 such as to form a mechanically robust single laminated film 10, which can be further processed and in particular wrapped around the electrode assembly 14 such as to form a pouch to manufacture a pouch-type battery cell. Therein, the thermal spreading layer 20 effectively receives, dissipates and transports heat along the area of the cell for improved thermal control of the cell. The thermal spreading layer 20 is thereby integrated within the laminated film 10 and in particular covered by the first polymer layer 12 such as to be protected against mechanical and chemical impacts. The thickness of the thermal spreading layer may therefore be small enough, such as to not significantly increase the overall weight of the laminated film 10 and thus the pouch-type cell.

The laminated film 10 may be provided as a suitable strip or web material, for example wound on a reel, such that it can be cut to size for manufacturing pouches for pouch-type battery cells. Alternatively, the laminated film may be provided as pre-cut films ready to be wrapped around an electrode assembly of a specific size.

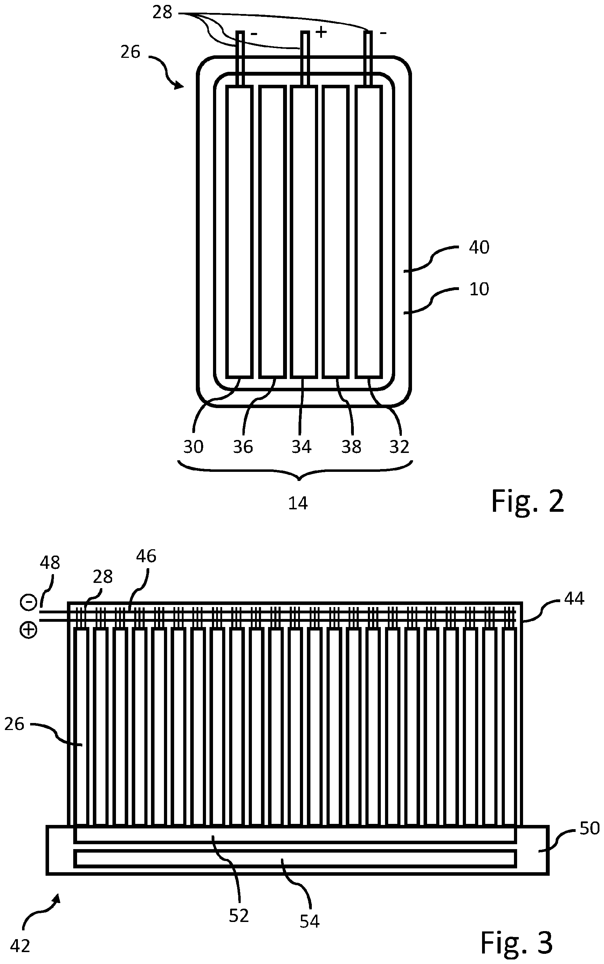

Fig. 2 shows a pouch-type battery cell 26 according to an embodiment of the present invention in cross-section. The battery cell 26 comprises the electrode assembly 14 mentioned before in relation with Figure 1. In a particular example, the electrode assembly 14 may include a first cathode 30, a second cathode 32, an anode 34 disposed between the first cathode 30 and the second cathode 32, a first separator 36 disposed between the first cathode 30 and the anode 34, and a second separator 38 disposed between the anode 34 and the second cathode 32. The electrode assembly 14 is preferably a lithium-ion electrode assembly or a lithium-polymer electrode assembly as known as such in the prior art. The first and second cathodes 30, 32 usually each comprise a current collector and cathode material attached to the current collector, e.g. deposited onto the current collector. Likewise anode 34 usually comprises a current collector and anode material attached to the current collector, e.g. deposited onto the current collector.

The electrode assembly 14 is accommodated within a pouch 40 made from one or more laminated films according to the present invention, in particular one or more laminated films 10 as described with reference to Fig. 1. Preferably, the electrode assembly 14 is sealed in between two layers of laminated film 10 (i.e. between two laminated films 10). The pouch 40 is thus sealed and preferably also evacuated, such as to protect the electrode assembly 14 and avoid diffusion of gases or liquids between the electrode assembly 14 and the exterior.

Tab connectors 28 electrically connected to the electrodes of the electrode assembly 14, especially to the respective current collectors of the anode and the cathodes, in particular negative tab connectors 28 contacting the current collectors of the cathodes 30, 32 and a positive tab connector 28 contacting the current collector of the anode 34, are provided such as to penetrate the pouch 40 to reach the exterior of the pouch and to allow electrical connection of the battery cell 26.

Fig. 3 shows a battery 42 according to an embodiment of the present invention. Battery 42 comprises a plurality of pouch-type cells 26, each having a pouch 40 from a laminated film 10 according to the present invention, for example a laminated film 10 as described above with reference to Fig. 1. In particular, each of the cells 26 may be configured as described above with reference to Fig. 2.

The battery cells 26 are stacked in parallel to one another such as to form a cell stack. To maintain mechanical integrity of the cell stack, battery 42 comprises a frame or housing 44 holding the cells 26 in position and allowing handling of battery 42 as a single unit. Furthermore, battery 42 comprises electric connection means 46 for connecting all cells 26 in parallel or in series, depending on the required characteristics of the battery, thus suitably connecting the contact tabs 28 of the cells 26 together and to battery terminals 48.

In addition, battery 42 may comprise a thermal management system 50, which includes a heat conductor 52, which is in direct contact with the pouches of all cells 26, and a cooling device 54 for cooling the heat conductor. The heat conductor may be a metal strip or a metal bar. The cooling device 54 may be an active cooling device such as a fan, a heat exchanger, etc., or a passive cooling device such as a plurality of cooling ribs. Alternatively, heat conductor 52 may be thermally connected to an external heat sink to transport heat away from battery 42.

In addition, the thermal management system 50 may comprise means for monitoring and controlling the temperature, for example a temperature sensor or electronics to control an active cooling device depending on the measured temperature.

In operation, heat generated within the electrode assemblies of the battery cells 26 will effectively be dissipated and transported through the heat spreading layer 20 integrated within the pouches of the cells 26 such as to achieve not only a homogeneous temperature distribution across the area of each cell but also to efficiently transport heat away from the cell, in particular towards cooling means of the battery, such as the thermal management system 50 shown in Fig. 3. Therefore, overheating of the battery can effectively be avoided even at high energy output. This allows designing batteries for challenging requirements such as for driving electric vehicles, in particular electric aircrafts.
10 ... laminated film
12 ... first polymer layer
14 ... electrode assembly
16 ... second polymer layer
18 ... aluminum layer
20 ... head spreading layer
22 ... adhesive
24 ... nylon layer
26 ... pouch-type battery cell
28 ... contact tabs
30 ... first cathode
32 ... second cathode
34 ... anode
36 ... first separator
38 ... second separator
40 ... pouch
42 ... battery
44 ... frame
46 ... electric connection means
48 ... battery terminals
50 ... thermal management system
52 ... head conductor
54 ... cooling device

## Claims

1. Laminated film (10) for packaging of pouch-type battery cells (26), the laminated film (10) comprising a plurality of layers including:
- a first polymer layer (12),
- a second polymer layer (16),
- a metal barrier layer (18) disposed between the first polymer layer (12) and the second polymer layer (16),
**characterized in that** the layers further include a heat spreading layer (20) made of a thermally conductive material, wherein the heat spreading layer (20) is integrated within the laminated film (10) such as to be disposed between the first polymer layer (12) and the second polymer layer (16).

2. Laminated film (10) of claim 1, wherein the heat spreading layer (20) has a thermal conductivity that is larger than 200 W/(m K), preferably larger than 1000 W/(m K).

3. Laminated film (10) of claim 1 or claim 2, wherein the heat spreading layer (20) is made from a carbon material, in particular a pyrolytic carbon material.

4. Laminated film (10) of at least one of the preceding claims, wherein the heat spreading layer (20) has a thickness between 0.5 µm and 200 µm.

5. Laminated film (10) of at least one of the preceding claims, wherein the heat spreading layer (20) is laminated on both of its opposite sides to adjacent layers of the plurality of layers of the laminated film (10).

6. Laminated film (10) of at least one of the preceding claims, wherein the first polymer layer (12) is made from polypropylene and/or the second polymer layer (16) is made from polyethylene terephthalate (PET).

7. Laminated film (10) of at least one of the preceding claims, wherein the heat spreading layer (20) is disposed between the metal barrier layer (18) and the first polymer layer (12).

8. Laminated film (10) of at least one of the preceding claims, wherein the layers further include a nylon layer (24), preferably made from oriented nylon (ONY).

9. Laminated film (10) of at least one of the preceding claims, wherein the first polymer layer (12) is adapted to form an inner layer of a pouch (40) of a pouch-type battery cell (26) and the second polymer layer (16) is adapted to form an outer layer of a pouch (40) of a pouch-type battery cell (26).

10. Pouch-type battery cell (26) comprising an electrode assembly (14), wherein the electrode assembly (14) comprises a cathode (30, 32), an anode (34) and a separator (36, 38), and wherein the electrode assembly (14) is accommodated within a pouch (40) made from a laminated film (10) according to any of the preceding claims.

11. Battery (42) comprising at least one pouch-type battery cell (26) according to claim 10.

12. Battery (42) of claim 11, wherein the battery (42) further comprises a thermal management system (50) adapted to control temperature of the at least one pouch-type battery cell (26), said thermal management system (50) including active cooling means (54) and/or passive cooling means, wherein said cooling means are preferably provided in direct thermal contact with the head spreading layer (20) of the at least one pouch-type battery cell (26).

13. Battery (42) of claim 11 or claim 12, wherein the battery (42) is adapted to drive an electric aircraft engine, in particular an engine of an electric vertical takeoff and landing aircraft, wherein the engine is rotatable between a hoover position in which a thrust direction of the engine is substantially parallel to the vertical axis of the aircraft, and a cruise position in which a thrust direction of the engine is substantially parallel to the longitudinal axis of the aircraft.
